(19) Europäisches Patentamt
European Patent Office
Office européen des brevets

(11) **EP 4 353 870 B1**

(12) **EUROPEAN PATENT SPECIFICATION**

(45) Date of publication and mention
of the grant of the patent:
**30.04.2025 Bulletin 2025/18**

(21) Application number: **23182079.6**

(22) Date of filing: **28.06.2023**

(51) International Patent Classification (IPC):
**C23F 11/04** (2006.01)    **C09K 8/035** (2006.01)
**C23F 11/16** (2006.01)    **C09K 8/54** (2006.01)

(52) Cooperative Patent Classification (CPC):
**C23F 11/04; C09K 8/035; C09K 8/54; C23F 11/16;**
C09K 2208/32

(54) **CORROSION INHIBITOR FOR IRON AND IRON ALLOYS**

KORROSIONSINHIBITOR FÜR EISEN UND EISENLEGIERUNGEN

INHIBITEUR DE CORROSION POUR FER ET ALLIAGES DE FER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **13.10.2022 IN 202221058654**

(43) Date of publication of application:
**17.04.2024 Bulletin 2024/16**

(73) Proprietor: **Tata Consultancy Services Limited
Maharashtra (IN)**

(72) Inventors:
• **KUMAR, DHARMENDR**
**411013 Pune, Maharashtra (IN)**
• **KANAMARLAPUDI, VENKATA MURALIDHAR**
**411013 Pune, Maharashtra (IN)**
• **JAIN, VINAY**
**411013 Pune, Maharashtra (IN)**
• **RAI, BEENA**
**411013 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2016/190865    CN-A- 103 806 003
CN-B- 103 668 215**

• **SULAIMAN KAZEEM O ET AL: "Quantum
chemical evaluation of the corrosion inhibition of
novel aromatic hydrazide derivatives on mild
steel in hydrochloric acid", COMPUTATIONAL
AND THEORETICAL CHEMISTRY, ELSEVIER,
AMSTERDAM, NL, vol. 1093, 13 August 2016
(2016-08-13), pages 73 - 80, XP029699793, ISSN:
2210-271X, DOI: 10.1016/J.COMPTC.2016.08.014**
• **PRITHVI ET AL: "Inhibitive Effect of
2-[4-(Dimethylamino) Benzylidene]
Hydrazinecarbothioamide on Corrosion of Mild
Steel in Acidic Solution", SURFACE
ENGINEERING AND APPLIED
ELECTROCHEMISTRY, ALLERTON PRESS,
HEIDELBERG, vol. 55, no. 4, 3 September 2019
(2019-09-03), pages 481 - 491, XP036877043,
ISSN: 1068-3755, [retrieved on 20190903], DOI:
10.3103/S1068375519040112**

EP 4 353 870 B1

**Description**

TECHNICAL FIELD

The disclosure herein generally relates to the field of inhibiting metallic corrosion, and, more particularly, to a corrosion inhibitor for iron and iron alloys.

BACKGROUND

Metal corrosion is a ubiquitous phenomenon costing the global economy trillions of dollars annually. Besides, corrosion can also lead to catastrophic explosions and consequent loss of material and life. In general terms, corrosion is the deterioration of a metal or an alloy when exposed to the environment. Corrosion cannot be stopped but it can be reduced to certain extent. There are several ways by which corrosion reduction can be made possible, viz., by using paints, coatings, corrosion resistant alloys, etc. However, the use of corrosion inhibitors is one of the most economical and effective ways to combat corrosion in the industry. Corrosion inhibitors are generally organic or inorganic compounds which when used in small (usually in parts per million) quantities reduce the corrosion significantly through formation of a protective film or through similar such mechanisms. Corrosion inhibitors are extensively used for a wide variety of applications in the industry. In particular, the oil and gas industry uses corrosion inhibitors for acid well stimulation for enhancing oil recovery from rock formations. Conventional process of screening and designing of a corrosion inhibitor is largely empirical and, therefore, extremely time consuming and expensive. Besides, there is a need for design of corrosion inhibitors which are efficient at high temperatures.

Performance of several corrosion inhibitors which are used conventionally depends on the medium treated, the type of surface that is susceptible to corrosion, the type of corrosion encountered, and the conditions to which the medium is exposed. Further, the most corrosion inhibitors do not show strong binding with iron and iron alloys surface and hence iron and iron alloys structures loses luster in presence of most of the conventionally used corrosion inhibitors. Further, an efficient and durable inhibitor that can effectively protect iron and iron alloys in aggressive environments such as high temperature for longer duration without affecting the luster is yet to be realized.

CN 103 806 003 A discloses an acidic oil extraction medium corrosion inhibitor, which contains thiourea and hexamethylenetetramine, wherein the mass ratio of thiourea to hexamethylenetetramine is 1:4-10:1. The acidic oil extraction medium corrosion inhibitor disclosed by the invention is high in corrosion inhibition, especially applicable to the corrosion prevention of N80 steel in an acidic oil extraction medium, namely, an ammonium persulfate solution, in an oilfield, wherein the mass concentration of ammonium persulfate is 2-10% (wt.), and the corrosion temperature is set at 10-80 DEG C; the acidic oil extraction medium corrosion inhibitor is low in toxicity, and especially suitable for the occasions with high environmental requirements.

WO 2016/190865 A1 discloses a method of treating in a subterranean formation including placing a corrosion inhibitor composition into a subterranean formation, where the formation includes an acidic environment having a pH of about 5 or below, where the composition includes: an organic solvent comprising an alcohol with a flash point of at least about 75 °C; a nitrogen containing compound; an aqueous acid solution comprising HC1; and contacting a metal surface with the corrosion inhibitor composition. A corrosion inhibitor composition includes an organic solvent comprising an alcohol with a flash point of at least about 75 °C; a nitrogen containing compound; and an aqueous acid solution comprising HC1.

CN 103 668 215 B discloses a composite corrosion inhibitor for inhibiting corrosion of steel in a CO2, H2S, HCl coexistence environment in the processes of oil-gas-water treatment and raw oil refining process. Preparation of the composite corrosion inhibitor involves adding imidazoline to thiourea solution, heating, and adding organic polyamine to the mixture. First an organic solvent solution A of 15% thiocarbamide is prepared; imidazoline is added with H3BO3 as a catalyst and then reacts with the solution A to prepare a reaction product (I). Organic polyamine and a urea compound are mixed to prepare a reaction product (II) at 100-160 °C. The reaction product (I) and the reaction product (II) are mixed at the mass ratio of (1:1) to (10:1) to obtain the composite corrosion inhibitor.

SULAIMAN KAZEEM O ET AL discloses the corrosion inhibition of mild steel in an an aqueous acid solution containing HCl with aromatic hydrazide derivatives such as 2-(3,4,5-tri-R-benzylidene) hydrazinecarbothioamide, (R = H, CH3, OCH3 and NH2). PRITHVI ET AL discloses the corrosion inhibition of mild steel in an an aqueous acid solution containing HCl, H2SO4 and H3PO4 with 2-[4-(dimethylamino) benzylidene] hydrazinecarbothioamide (DABHC).

SUMMARY

The present disclosure present technological improvements as solutions to one or more of the above-mentioned technical problems recognized by the inventors in the conventional corrosion inhibitors. The invention is set out in the appended set of claims.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a computing machine for selecting optimal corrosion inhibitor molecule, in accordance with some embodiments of the present disclosure.
FIG. 2 illustrates the structure of a Naphthalene-1-thiocarboxamide molecule, in accordance with the present disclosure.
FIG. 3 illustrates the Density Functional Theory (DFT) optimized adsorption structure of naphthalene-1-thiocarboxamide on Fe (001) surface, in accordance with the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts.

Most of the conventional corrosion inhibitor compounds are either not so effective or require large amount of inhibitor for adequate protection. The inefficient corrosion inhibitor results in structural failure leading to serious economic, environmental and human losses. Further, most corrosion inhibitors do not show such strong binding with the surface of iron and iron alloys and the material loses luster i.e. corrodes in presence of most of the conventional corrosion inhibitors.

The present disclosure addresses the problem of acid corrosion of iron and iron alloys which is relevant for a wide variety of industries such as oil and gas production and acid pickling etc. The technical solution provided in the present disclosure is a new corrosion inhibitor composition comprising an effective amount of Naphthalene-1-thiocarboxamide dissolved in an organic solvent for iron and iron alloys in hydrochloric acid i.e. HCl media. This is specifically relevant for acid well stimulation in the oil and gas industries.

In an embodiment, the corrosion inhibitor composition comprising an effective amount of Naphthalene-1-thiocarboxamide dissolved in an organic solvent is providing ~94-100 percentage corrosion inhibition efficiency in 1 M HCl for mild iron and iron alloys at a very low concentration of 1 millimolar (mM).

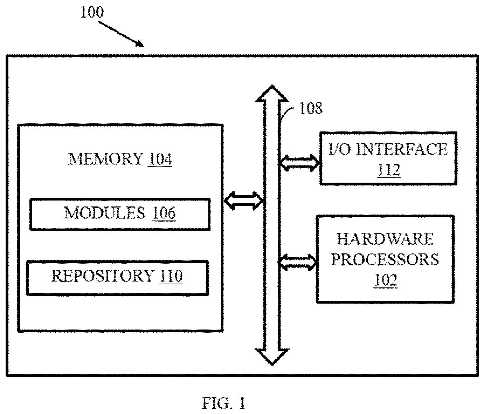

FIG. 1 is a functional block diagram of a computing machine/system 100 for selecting optimal corrosion inhibitor molecule, in accordance with some embodiments of the present disclosure. The system 100 includes or is otherwise in communication with hardware processors 102, at least one memory such as a memory 104, an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

The plurality of modules 106 include programs or coded instructions that supplement applications or functions performed by the system 100 for automated authoring of purposive models from NL documents. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the semantic navigation using spatial graph and trajectory history.

The data repository (or repository) 110 may include a plurality of abstracted piece of code for refinement and data that is processed, received, or generated as a result of the execution of the plurality of modules in the module(s) 106. In an embodiment, the data repository 110 includes a molecular database comprising a plurality of molecular details.

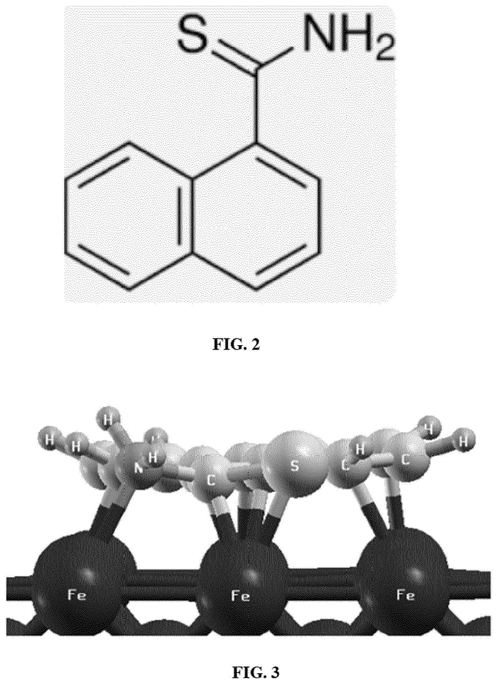

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Working of the components of the system 100 are explained with reference to the method steps depicted in FIG. 3, FIGS. 6A and FIG. 6B.

The present disclosure identified the Naphthalene-1-thiocarboxamide molecule as the corrosion inhibitor using a computational method based on the HOMO- LUMO (Highest Occupied Molecular Orbital - Lowest Unoccupied Molecular Orbital) energy gap values of the plurality of molecules. In an embodiment, the computational method for identifying an optimal corrosion inhibitor molecule is performed using the computing machine 100 shown in FIG. 1. Initially, a plurality of molecules or molecular details are obtained from a molecular database. Further, the HOMO-LUMO energy gaps are computed for each of the plurality of molecules obtained from the molecular database using Density Functional Theory (DFT) based techniques. Further, a plurality of potential molecules with the lowest HOMO-LUMO energy gap values are identified from the plurality of molecules based on a threshold. Further, a detailed DFT-based adsorption studies are performed on the plurality of potential molecules on a representative surface such as Fe (001) for iron and iron alloys, to compute its adsorption energy values. Further, the adsorption energy values of each of the plurality of potential molecules are compared with a known inhibitor compound (as reference) like trans-cinnamaldehyde, wherein, higher the magnitude of adsorption energy better the inhibitor. Further, an optimal molecule (for example, Naphthalene-1-thiocarboxamide) is selected based on the adsorption energy values, where in a molecule having higher adsorption energy magnitude than the reference like trans-cinnamaldehyde is taken. In an embodiment, it was identified that the adsorption energy of napthalene-1-thiocarboxamide (Eads = -74 kcal/mol) to be almost 68 percent higher than that of trans-cinnamaldehyde thus showing its excellent potential as a corrosion inhibitor. Finally, the optimal corrosion inhibitor molecule is validated experimentally using standard weight loss tests of carbon steel samples in 1 molar HCl containing 1 millimolar (mM) concentration of the molecule selected in an organic solvent or inhibitor composition.

The method to identify the optimal corrosion inhibitor molecule explained above in brief is in accordance with inventor's Indian patent publication no. 202221011898, published on September 08, 2023. Thus, the entire optimal corrosion inhibitor molecule identification approach is not reexplained herein for brevity.

In embodiment, the corrosion inhibitor composition is included/added in the commodity and/or corrosive substances (for example, oil, gas, acid, alkaline, fertilizer and the like) stored in storage space or in transportation of the same via pipeline or umbilical, wherein the said corrosion inhibitor composition forms a layer on the metal.

In embodiment, the corrosion inhibitor composition is applied on a metal surface before introducing the commodity and/or corrosive substances in storage space or in transportation of the same via pipeline or umbilical or any kind of containers (for example, acid pickling, acid well stimulation, acid wash, scale removal and the like).

In another embodiments, the corrosion inhibitor composition is used in drilling and machining applications to protect iron and iron alloys. In said applications, the corrosion inhibitor composition is used with or without lubricants/-coolants. For example, in some applications, the corrosion inhibitor composition is used in combination with lubricants/-coolants. In some other applications, the corrosion inhibitor composition is used without lubricants/coolants.

The structure of the Naphthalene-1-thiocarboxamide molecule is shown in FIG. 2 and the quantum chemical descriptors of Naphthalene-1-thiocarboxamide is given in Table I. Now referring to Table I, the quantum chemical descriptors of Naphthalene-1-thiocarboxamide are compared to Trans Cinnamaldehyde. It is observed that Naphthalene-1-thiocarboxamide shows very low energy gap even lower than the commercially used trans-cinnamaldehyde. The identified molecule (Naphthalene-1-thiocarboxamide) strongly binds with the metal surface, metal being one of iron and iron alloys as illustrated in FIG. 3, acting as barrier between corrosive element, and metal surface thus protecting iron and iron alloys from corrosion. Now referring to FIG. 3, naphthalene-1-thiocarboxamide adsorbs on iron surface in flat orientation. S, N and C atoms of naphthalene-1-thiocarboxamide make chemical bonds with iron surface atoms, forming a strong, impermeable layer on the surface of iron and iron alloys. Further, this strong impermeable layer of Naphthalene-1-thiocarboxamide protects iron and iron alloys from degradation and thus, the luster of the iron and iron alloys remains intact even after exposed to/left in acid.

Table I

| Quantum chemical descriptors | Naphthalene-1-thiocarboxamide | Trans Cinnamaldehyde |
|:---:|:---:|:---:|
| HOMO (eV) | -5.89 | -6.98 |
| LUMO (eV) | -1.85 | -2.52 |
| ΔEgap (eV) | 4.04 | 4.44 |
| Eads (kcal/mol) | -73.77 | -44.40 |

Further, experimental validation via standard weight loss tests of mild steel samples in 1 M HCl containing 1 millimolar (mM) concentration of the inhibitor molecule is performed. The inhibition efficiency of napthalene-1-thiocarboxamide is ~94-100 percent as shown in Table II. Whereas the inhibition efficiency of trans-cinnamaldehyde even at 1.5mM is 77 percent in 1M HCl for the same mild steel.

Table II

| ID | Conc. (mM) | Weight loss (gms) | CR (cm/y) | Inhibition Efficiency (%) |
|:---:|:---:|:---:|:---:|:---:|
| 1 | 1 | 0.002 | 0.0614 | 94.46 |
| 2 | 1 | 0 | 0 | 100 |

Experimentation details:

In an embodiment, the present disclosure is experimented as follows: The examples of corrosion inhibition effect of the molecule i.e. Naphthalene 1-thiocarboxamide on iron (Fe) and iron alloys, are given at two temperatures. In an embodiment, the composition of the iron and iron alloys used to test the inhibitor molecule is 0.044C-0.04Si-1.15Mn-0.028P-0.025S-0.051Cr-0.001Mo-0.001Ni-0.052Cu-0.011V-Balance Fe, all the amounts of elements are in weight percentages. Here, C is Carbon, Si is Silicon, Mn is Manganese, P is Phosphorous, S is Sulphur, Cr is Chromium, Mo is Molybdenum, Ni is Nickel, Cu is Copper, and V is Vanadium.

The mild steel coupons were initially abraded with various emery papers of decreasing coarseness i.e. 80, 150, 220, 400 grits to obtain a fine finish surface. The fine finished coupons are cleaned with acetone and further wrapped in a paper to avoid any further oxidation and stored in a safe and dry place until further use.

Further, the 400 grit finished coupons are immersed in 100ml 1M HCl solution for 2hrs at room temperature and at 60°C, to find out the corrosion rate. Similarly, the fine finished coupons are also immersed in 100ml 1M HCl along with the inhibitor composition i.e. Naphthalene 1-thiocarboxamide dissolved in tetrahydrofuran, with an effective concentration of inhibitor 1mM for 2hrs at the above temperatures.

The below table provides the information on test results. The average Corrosion Rates (CR) at room temperature and 60°C in 1M HCl without inhibitor for 2hrs immersion are 1.1081cm/y and 16.42325cm/y respectively. The Inhibition Efficiency (IE) is calculated using the formula given below.

$$IE\ (\%) = \frac{(CR\ without\ inhibitor) - (CR\ with\ inhibitor)}{CR\ without\ inhibitor}\ x\ 100$$

Table III

| Temperature (°C) | Concentration of inhibitor molecule (mM) | Corrosion Rate (cm/y) | Inhibition Efficiency (%) |
|:---:|:---:|:---:|:---:|
| 27 | 1 | 0.0614 | 94.46 |
| 27 | 1 | 0 | 100 |
| 60 | 1 | 0.2233 | 98.64 |
| 60 | 1 | 0.2558 | 98.44 |

The written description describes the subject matter herein to enable any person skilled in the art to make and use the embodiments.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

## Claims

1.  A corrosion inhibitor composition for inhibiting corrosion of iron and iron alloys, the corrosion inhibitor composition comprising: an effective amount of a naphthalene-1-thiocarboxamide dissolved in an organic solvent, wherein the effective amount of the corrosion inhibitor composition introduced into an environment is in the range from 0.01 to 5000 parts per million by volume.

2.  The corrosion inhibitor composition as claimed in claim 1, wherein iron alloys comprise carbon steel, stainless steel, alloy steel, steels, and cast irons.

3.  The corrosion inhibitor composition as claimed in claim 1, wherein the corrosion inhibitor composition is used with the metal in the environment where the iron and iron alloys would otherwise be corrodible therein at various temperatures.

4.  The environment as claimed in claim 3 is an acidic solution.

5.  The environment as claimed in claim 3 is one of, a) a water-containing hydrocarbon b) a water-containing gas with acidic solution c) a water containing gas without acidic solution and d) a combination thereof.

6.  The organic solvent as claimed in claim 1 is one or more or combination of tetra hydro furan (THF), dimethyl formamide, dimethyl sulphoxide, ethanol, propanol, diethyl ether, benzene, carbon tetrachloride, trichloro ethylene, ethers, esters, ketones, amines, tetrachloroethylene, toluene, methyl chloride, hexane, nitrated or chlorinated hydrocarbons, alcohols, acetonitrile, glycols, pyridine, and xylene.

## Patentansprüche

1.  Korrosionsinhibitorzusammensetzung zur Inhibierung der Korrosion von Eisen und Eisenlegierungen, wobei die Korrosionsinhibitorzusammensetzung eine wirksame Menge eines in einem organischen Lösungsmittel gelösten Naphthalin-1-Thiocarboxamids umfasst, wobei die wirksame Menge der Korrosionsinhibitorzusammensetzung, die in eine Umgebung eingebracht wird, im Bereich von 0,01 bis 5000 Volumenteilen pro Million liegt.

2.  Korrosionsinhibitorzusammensetzung nach Anspruch 1, wobei die Eisenlegierungen Kohlenstoffstahl, rostfreien Stahl, legierten Stahl, Stähle und Gusseisen umfassen.

3.  Korrosionsinhibitorzusammensetzung nach Anspruch 1, wobei die Korrosionsinhibitorzusammensetzung zusammen mit dem Metall in der Umgebung verwendet wird, in der das Eisen und die Eisenlegierungen sonst bei verschiedenen Temperaturen korrodierbar wären.

4.  Umgebung nach Anspruch 3, wobei die Umgebung eine saure Lösung ist.

5.  Umgebung nach Anspruch 3, wobei die Umgebung eines von a) einem wasserhaltigen Kohlenwasserstoff, b) einem wasserhaltigen Gas mit saurer Lösung, c) einem wasserhaltigen Gas ohne saure Lösung und d) einer Kombination davon ist.

6.  Organisches Lösungsmittel nach Anspruch 1 ist eines oder mehrere oder eine Kombination von Tetrahydrofuran (THF), Dimethylformamid, Dimethylsulfoxid, Ethanol, Propanol, Diethylether, Benzol, Tetrachlorkohlenstoff, Trichlorethylen, Ethern, Estern, Ketonen, Aminen, Tetrachlorethylen, Toluol, Methylchlorid, Hexan, nitrierten oder chlorierten Kohlenwasserstoffen, Alkoholen, Acetonitril, Glykolen, Pyridin und Xylol ist.

**Revendications**

1. Composition inhibitrice de corrosion pour inhiber la corrosion du fer et d'alliages de fer, la composition inhibitrice de corrosion comprenant : une quantité efficace d'un naphtalène-1-thiocarboxamide dissous dans un solvant organique, dans laquelle la quantité efficace de la composition inhibitrice de corrosion introduite dans un environnement est dans la plage de 0,01 à 5000 parties par million en volume.

2. Composition inhibitrice de corrosion selon la revendication 1, dans laquelle les alliages de fer comprennent de l'acier au carbone, de l'acier inoxydable, de l'acier allié, des aciers et des fontes.

3. Composition inhibitrice de corrosion selon la revendication 1, dans laquelle la composition inhibitrice de corrosion est utilisée avec le métal dans l'environnement où le fer et les alliages de fer seraient sinon corrodibles dans celui-ci à diverses températures.

4. Environnement selon la revendication 3 est une solution acide.

5. Environnement selon la revendication 3 est l'un parmi, a) un hydrocarbure contenant de l'eau, b) un gaz contenant de l'eau avec une solution acide, c) un gaz contenant de l'eau sans solution acide et d) une combinaison de ceux-ci.

6. Solvant organique selon la revendication 1 est un ou plusieurs ou une combinaison de tétrahydrofuranne (THF), de diméthylformamide, de diméthylsulfoxyde, d'éthanol, de propanol, de diéthyléther, de benzène, de tétrachlorure de carbone, de trichloroéthylène, d'éthers, d'esters, de cétones, d'amines, de tétrachloroéthylène, de toluène, de chlorure de méthyle, d'hexane, d'hydrocarbures nitrés ou chlorés, d'alcools, d'acétonitrile, de glycols, de pyridine et de xylène.

100

108

MEMORY 104

MODULES 106

REPOSITORY 110

I/O INTERFACE 112

HARDWARE PROCESSORS 102

FIG. 1

**FIG. 2**

**FIG. 3**

**EP 4 353 870 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 103806003 A
- WO 2016190865 A1
- CN 103668215 B
- IN 202221011898